# EUROPEAN PATENT SPECIFICATION

(11) **EP 2 688 855 B1**
(45) Date of publication and mention of the grant of the patent: **06.09.2017**
(21) Application number: 12710083.2
(22) Date of filing: 22.03.2012
(51) Int. Cl.: C04B 28/02, C04B 28/08, C04B 28/14, C04B 40/00

(54) **ACTIVATOR COMPOSITION FOR LATENT HYDRAULIC AND/OR POZZOLANIC BINDER MATERIALS**
AKTIVATORZUSAMMENSETZUNG FÜR LATENTE HYDRAULISCHE UND/ODER PUZZOLANISCHE BINDEMATERIALIEN
COMPOSITION D'ACTIVATION POUR LIANTS HYDRAULIQUES ET/OU POZZOLANIQUES LATENTS

(30) Priority: 23.03.2011 EP 11159446
(43) Date of publication of application: 29.01.2014
(73) Proprietor: Sika Technology AG, 6340 Baar (CH)
(72) Inventor: FLATT, Robert, CH-8706 Feldmeilen (CH); BAILLEUL, Pascal, F-76220 Avesnes-en-Bray (FR); GUYOT, Christophe, F-69005 Lyon (FR)
(74) Representative: Sika Patent Attorneys
(86) International application number: PCT/EP2012/055102
(87) International publication number: WO 2012/126994

(56) References cited:
- BELLMANN F ET AL: "Activation of blast furnace slag by a new method", CEMENT AND CONCRETE RESEARCH, PERGAMON PRESS, ELMSFORD, NY, US, vol. 39, no. 8, 1 August 2009 (2009-08-01) , pages 644-650, XP026285072, ISSN: 0008-8846, DOI: DOI:10.1016/J.CEMCONRES.2009.05.012 [retrieved on 2009-06-26]
- COLLINS: "Early age strength and workability of slag pastes activated by NaOH and Na2CO3", CEMENT AND CONCRETE RESEARCH, vol. 28, no. 5, 1 January 1998 (1998-01-01), page 655, XP055001521, ISSN: 0008-8846
- LI: "The activation and hydration of glassy cementitious materials", CEMENT AND CONCRETE RESEARCH, vol. 32, no. 7, 1 January 2002 (2002-01-01), page 1145, XP055001523, ISSN: 0008-8846
- YUN HUANG ET AL: "Effect of sodium hydroxide on the properties of phosphogypsum based cement", JOURNAL OF WUHAN UNIVERSITY OF TECHNOLOGY-MATER. SCI. ED., vol. 25, no. 2, 1 April 2010 (2010-04-01), pages 342-345, XP055001525, ISSN: 1000-2413, DOI: 10.1007/s11595-010-3342-7

## Description

### Technical field

The invention relates to an activator composition and its use for activating latent hydraulic and/or pozzolanic binder materials, in particular slag and/or fly ash. Another object of the invention is a binder composition comprising the activator composition, as well as a method for the production of such a binder composition.

### Background art

Industrial byproducts, such as slag, fly ash or silica fume, can be used as a partial replacement for Portland cement in mortar or concrete formulations. The use of such byproducts has no adverse environmental impact in terms of CO₂ emissions when re-used. In contrast, the partial replacement of cement with byproducts allows reducing the overall consumption of Portland cement. Moreover, the addition of such byproducts can additionally be beneficial in view of the durability and appearance of mortar or concrete. For example, the addition of slag to cement compositions will lead to a lighter color of the hardened product when compared to pure Portland cement and may improve concrete resistance against aggressive chemicals.

However, eligible industrial byproducts for mortar or concrete formulations are in general only "latently" hydraulic or of pozzolanic character, i.e. they are not hydraulic binders in a strict sense such as Portland cement which binds directly when mixed with water. In order to initiate the hydration or hardening process, it is necessary to activate latent hydraulic or pozzolanic materials when used as binder replacements in mortar or concrete formulations.

For example, one of the oldest methods for activating slag is lime activation, i.e. mixing slag with Portland cement. As well, it is known to add alkali salts as activating agent for slag.

In this context, EP 0 553 131 B1 (Kurz) discloses a method for slag activation with a composition based on magnesium oxide, phosphate, alkali and calcium.

However, known methods for activating latent hydraulic or pozzolanic binder materials have several disadvantages: For example, the development of mechanical strength in the mortar or concrete mix can be too slow or too fast, or the long term strength is unsatisfactory. The mortar or concrete produced can as well suffer from poor chemical resistance, or bear a high swelling risk.

There is thus a need to develop alternative methods for activating latent hydraulic and/or pozzolanic binder materials, in particular slag and/or fly ash, which overcome the aforementioned drawbacks.

Further, Yun Huang et al disclose in the Journal of Wuhan University of technology-Mater. Sci.Ed. vol. 25, no. 2, 2010, pp. 342-345 an activator composition comprising NaOH, calcium sulfate and limestone.

### Disclosure of the invention

It is an object of the present invention to provide an improved activator composition that is suitable for activating latent hydraulic and/or pozzolanic binder materials. In particular, the activator composition should be suitable for activating latent hydraulic and/or pozzolanic binders in binder compositions comprising hydraulic binders as well as latent hydraulic and/or pozzolanic binder materials. Especially, the activator composition should be capable of enhancing the early compressive strength of such binder compositions.

Surprisingly, it has been found that this object is achieved by the features of claim 1.

As could be shown, the inventive activator composition features inter alia an unexpectedly strong activation of latent hydraulic and pozzolanic binder materials. This is in particular true for binder compositions comprising cement as hydraulic binder and slag and/or fly ash as latent hydraulic and/or pozzolanic binder material. Thereby, the at least two components **A** and **B** of the activator composition interact functionally. This results in an activation of latent hydraulic and/or pozzolanic binder materials much greater than the sum of the possible activation of the individual components **A** and **B** taken alone. In other words, components **A** and **B** interact synergistically.

With the activator component it is e.g. possible to produce high quality concrete or mortar in which up to at least 60 wt.-% of cement can be replaced by latent hydraulic and/or pozzolanic binder materials, in particular slag and/or fly ash. Since slag and fly ash are byproducts from industrial processes, the CO₂ emission linked to the production of cement can be reduced significantly. Moreover, the activator composition allows producing concrete with enhanced compressive strengths and low swelling or expansion. For example the compressive strength measured at 10ºC can be up to 2 MPa at 18 hours and up to 45-50 MPa at 28 days. Furthermore, the activator composition is compatible with plasticizers allowing adjusting the consistency or slump of concrete mixtures to consistency classes S4 or even S5 (according to EN 206-1) for at least 90 minutes.

Overall, the inventive activator composition is a highly flexible and efficient activator for different type of latent hydraulic and pozzolanic binder materials. This makes it possible to produce high quality and environment friendly mortar and concrete.

Additional aspects of the invention are subject of further independent claims. Particularly preferred embodiments are outlined throughout the description and the dependent claims.

### Ways of carrying out the invention

In the present context, the expression "hydraulic binder" in particular stands for substances that harden because of hydration chemical reactions and produces hydrates that are not water-soluble. In particular, the hydration chemical reactions of the hydraulic binder takes essentially place independently of the water content. This means that hydraulic binder can harden and retain their strength even when exposed to water, e.g. underwater or under high humidity conditions. In contrast, non-hydraulic binders (e.g. air-slaked lime or and gypsum) are at least partially water soluble and must be kept dry in order to retain their strength. Especially, within the present context, a "hydraulic binder" is capable to harden directly when mixed with water without the need of any additional activation. A preffered hydraulic binder is cement.

The term "latent hydraulic and/or pozzolanic binder materials" stands in particular for type II concrete additives with latent hydraulic and/or pozzolanic character according to EN 206-1. In particular, the latent hydraulic or pozzolanic binder material comprises or consists of slag, fly ash, silica fume and/or natural pozzolanes. In particular, "latent hydraulic and/or pozzolanic binder materials" are not able to harden directly when mixed with water. These materials usually need an additional activation.

The term "slag" has its usual meaning and denotes in particular a byproduct of iron and steel making commonly used for blending cements, especially according to EN 15167. Preferably, the slag is a ground granulated slag, in particular a ground granulated blast furnace slag. In the present context, favorable slag is ground to a Blaine fineness of 3000 - 5000 cm²/g. Slags with Blaine finenesses higher than 5000 cm²/g can in principle also be used but they are more expensive to produce.

"Fly ash" denotes a residue generated in coal combustion mainly consisting of silicon dioxide, aluminum oxide and calcium oxide. Preferable fly ash is the one according to norm EN 450-1.

"Silica fume" is a byproduct of silicon production and is mainly consisting of amorphous silicon dioxide. Preferable silica fume is the one according to norm EN 13263-1.

A component suitable for accelerating the hardening of a hydraulic binder material is in particular a substance, which, when being present in a hydraulic binder, will shorten the time until the initial setting starts after mixing with water.

A first aspect of the invention relates to an activator composition, in particular suitable for activating latent hydraulic and/or pozzolanic binder materials, especially slag and/or fly ash, comprising or consisting of:
a) a first component **A**, comprising or consisting of an alkali metal salt and/or an earth alkali metal salt or an alkali hydroxide and/or an earth alkali hydroxide;
b) a second component **B**, comprising or consisting of a metal sulfate;
c) a third component **C**, suitable for accelerating the hardening of a hydraulic binder; wherein component **C** comprises or consists of an alkali nitrate and/or an earth alkali nitrate;
d) optionally, a filler material;
with at least the components **A**, **B** and **C** being chemically different,
wherein component **B** being present in an amount of 10 - 90 wt%, with
respect to the total weight of the composition.

Especially, component **A** comprises or consists of an alkali and/or earth alkali hydroxide, an alkali carbonate, an alkali silicate, an alkali metal chloride, an earth alkali metal chloride, an alkali metal bromide and/or an earth alkali metal bromide. In particular, component **A** is selected from the group of NaOH, KOH, Ca(OH)₂, Na₂CO₃, Na₂SiO₃ · n H₂O (with n = 5, 6, 8, 9), NaCl, NaBr, CaCl₂ and/or CaBr₂. Thereby, component **A** can comprise or consist of a mixture of two, three or even more of the afore mentioned metal salts.

Especially, component **A** comprises or consists of a base. In the present context, a base is in particular defined as a substance that upon addition to an aqueous solution is capable of increasing the pH of the solution.

According to a preferred embodiment, component **A** comprises or consists of an alkali metal hydroxide, in particular NaOH.

According to another preferred embodiment, component **A** comprises or consists of an earth alkali metal hydroxide, in particular Ca(OH)₂.

According to a further preferred embodiment, component **A** comprises or consists of a mixture of an alkali metal hydroxide and an earth alkali metal hydroxide, in particular a mixture of NaOH and Ca(OH)₂.

In particular, component **A** is present in an amount of 5 - 50 wt%, preferably 10-30 wt%, especially 12 - 20 wt%, with respect to the total weight of the activator composition. This has proven to be an optimal proportion for component **A**, in particular if component **A** is an alkali and/or earth alkali metal salt, especially an alkali metal hydroxide and/or earth alkali metal hydroxide.

Preferably, component **B** comprises or consists of an alkali metal sulfate and/or earth alkali metal sulfate. Very beneficial is calcium sulfate and/or sodium sulfate and/or potassium sulfate. Especially preferred are calcium sulfate and/or sodium sulfate. In particular calcium sulfate of the formula CaSO₄ · n H₂O, whereby n = 0, 0.5 or 2. An effective form is CaSO₄ · 0.5 H₂O. A preferred type of sodium sulfate is Na₂SO₄. A preferred type of potassium sulfate is K₂SO₄.

According to a preferred embodiment, component **B** comprises or consists of a mixture of an alkali metal sulfate and an earth alkali metal sulfate, in particular a mixture of calcium sulfate and sodium sulfate. Preferred types sulfates are the ones mentioned afore.

Component **B** is present in an amount of 10 - 90 wt%, preferably 40 - 70 wt%, especially 40 - 60 wt%, with respect to the total weight of the composition. This is especially advantageous in combination with an amount of component **A** of 5 - 50 wt%, preferably 10 - 30 wt%, especially 12 - 20 wt%.

A highly advantageous combination of components **A** and **B** are the following:
- component **A** comprises or consists of an alkali metal hydroxide, in particular NaOH, and component **B** comprises or consists of an earth alkali metal sulfate, in particular calcium sulfate, preferably CaSO₄ · 0.5 H₂O, or
- component **A** comprises or consists of an earth alkali metal hydroxide, in particular Ca(OH)₂, and component **B** comprises or consists of a mixture of an alkali metal sulfate and an earth alkali metal sulfate, in particular a mixture of sodium sulfate and calcium sulfate, especially as defined above. Binder compositions treated with such kind of activator composition are very beneficial in terms of workability (slump).

The activator composition comprises a third component **C**, suitable for accelerating the hardening of a hydraulic binder material. Component **C** comprises or consists of an alkali and/or earth alkali metal nitrate.. The addition of component **C** further enhances the advantageous effects of the activator composition. Components **A**, **B** and **C** functionally interact in a synergistic manner.

Suitable substances for component C are e.g:
- In general, salts with Li⁺, K⁺, Na⁺, Ca²⁺ Mg²⁺, Sr²⁺, Rb⁺, Cs⁺, and/or Ba²⁺ as cationic part and NO3⁻, as anionic part, such as:
   - Ca(NO₃)₂ · n H₂O with n commonly 1 or 4,
   - NaNO₃

Moreover, component **C** can as well comprise a mixture of two, three or even more of the above mentioned substances.

Component **C** comprises or consists of an alkali and/or earth alkali nitrate. In particular suitable are Ca(NO₃)₂ · n H₂O and/or KNO₃ · y Ca(NO₃)₂ · n H₂O and/or NH₄NO₃ · y Ca(NO₃)₂ · n H₂O, with n = 0 - 15, y = 1 - 10. Especially, component **C** comprises or consists of NH₄NO₃ · 6 Ca(NO₃)₂ · 12 H₂O and/or Ca(NO₃)₂ · 4 H₂O. Highly suitable is Ca(NO₃)₂ · n H₂O, especially with n = 4.

Component **C** in an amount of 1 - 50 wt%, in particular 5 - 25 wt%, with respect to the total weight of the composition, has been proven to be beneficial.

A suitable filler material can e.g. be selected from the group of chalk stone, limestone, silica, quartz and/or carbon black. Especially, the filler material is finely divided. Preferably the filler material is CaCO₃ and/or SiO₂. Highly preferred is CaCO₃. However, other filler materials might be suitable as well.

An advantageous amount of the optional filler material is from 0 - 85 wt%, preferably 0.1 - 85 wt%, in particular 0.1 - 30 wt%, with respect to the total weight of the composition.

Furthermore, the activator composition can optionally be used in combination with a plasticizer and/or water reducing agent. This allows adjusting the slump life of a binder composition treated with the activator composition. The plasticizer may for example be selected from the group of lignosulfonates, gluconates, naphtalenesulfonates, melamine sulfonates, vinyl copolymers and/or polycarboxylates.

Preferably the plasticizer comprises or consists of a polycarboxylate, in particular a comb copolymer with polycarboxylate backbone and polyether side chains. Suitable polycarboxylates are disclosed in EP 1 138 697 A1, paragraphs 0023 - 0030, which is incorporated herein by reference. Preferably, among the polycarboxylates of EP 1 138 697 A1, the ones with structural units selected from the group given by formulas A, B and C are most preferred. Corresponding products are commercially available, e.g. from Sika (Switzerland). According to a variant, plasticizers can be present in the solid state or in powder form, respectively. EP 1 348 729 A1 (page 3 - 5 and examples) discloses a method for the production of such kind of plasticizers. Plasticizers in powder form are as well commercially available, e.g. from Sika (Switzerland).

Surprisingly, it has been found that these plasticizers are highly compatible with the inventive activator composition. This allows adjusting the consistency or slump of mortar or concrete mixtures. As it could be shown, it is possible to produce mortar or concrete mixtures with a consistency according to class S4 (slump value: 160 - 210 mm) or even class S5 (slump value ≥ 220 mm). S4 and S5 are consistency classes as defined in EN 206-1.

The plasticizer is preferably added when preparing a binder composition, e.g. a mortar or concrete mix. The plasticizer may for example be dissolved in the water used to prepare the mortar or concrete mix. However, it is possible to add the plasticizer directly to the activator composition before adding the activator composition to a binder. This allows the handling to be simplified. In the later case, the plasticizer is preferably in powder form.

Thus, according to a preferable embodiment, the activator composition further comprises a plasticizer, in particular a plasticizer in powder form. Preferably the plasticizer is a polycarboxylate, in particular a comb copolymer with polycarboxylate backbone and polyether side chains.

If present, the proportion of the plasticizer in the activator composition is preferably between 1 - 40 wt.%, in particular 1 - 30 wt.%, with respect to the total weight of the activator composition.

An especially preferred embodiment of the activator composition consists of:
a) 5 - 50 wt%, preferably 10 - 30 wt%, of an alkali metal salt, preferably and alkali hydroxide, in particular NaOH; and
b) 10 - 90 wt%, preferably 40 - 70 wt%, of calcium sulfate, in particular calcium sulfate of the formula CaSO₄ · 0.5 H₂O; and
c) 5 - 25 wt%, of Ca(NO₃)₂ · 4 H₂O and/or NH₄NO₃ · 6 Ca(NO₃)₂ · H₂O, and
d) complement to 100 wt%, in particular 0 - 85 wt%, preferably 0 - 30 wt%, of a filler material, especially CaCO₃.

Another preferred embodiment of the activator composition consists of:
a) 5 - 50 wt%, preferably 10 - 30 wt%, of an earth alkali metal salt, preferably and earth alkali metal hydroxide, in particular Ca(OH)₂; and
b) 10 - 90 wt%, preferably 40 - 70 wt%, of a mixture of an alkali metal sulfate and an earth alkali metal sulfate, in particular a mixture of calcium sulfate and sodium sulfate, preferably a mixture of CaSO₄ · 0.5 H₂O and Na₂SO₄; and
c) 1 - 50 wt%, preferably 5 - 25 wt%, of Ca(NO₃)₂ · 4 H₂O and/or NH₄NO₃ · 6 Ca(NO₃)₂ · H₂O, and
d) complement to 100 wt%, in particular 0 - 85 wt%, preferably 0.1 - 30 wt%, of a filler material, especially CaCO₃.

Thereby, the proportions in wt.% are with respect to the total weight of the activator composition.

According to a favorable embodiment, the activator composition is present in the form of a one-part mixture with all of the components **A**, **B**, **C**, optionally the filler material, and any further ingredients being intermixed. In this case, the activator composition can be in the form of a powder, a granulate pellets, flakes and/or a compacted body.

According to another advantageous embodiment, the activator composition is present in the form of a two-part mixture, with component **B** being present in a first receptacle, component **C** being present in a second receptacle, and component **A** being present in the first and/or the second receptacle. In this case it is for example possible to present the activator composition in liquid form. This might allow the intermixing with a binder to be simplified.

Another option is to prepare a dispersion, in particular a suspension, of the activator composition. In that case, the one-part mixture as disclosed above can for example be dispersed in a liquid medium, such as e. g. water or mineral oil.

Thus, in another preferred embodiment, the activator composition is present as a dispersion, in particular a suspension. This allows having the activator composition in the form of a liquid one-part mixture, possibly making the intermixing with a hydraulic binder easier.

Another aspect of the present invention relates to a binder composition comprising:
a) an activator composition and
b) a hydraulic binder, and/or
c) a latent hydraulic binder material and/or a pozzolanic binder material
c) optionally, a plasticizer.

Thereby, the activator composition, the hydraulic binder, the latent hydraulic binder material, the pozzolanic binder material as well as the plasticizer are in particular defined as afore mentioned.

Preferably, the binder composition comprises or consists of 10 - 95 wt.% of hydraulic binder and 90 - 5 wt.% of latent hydraulic and/or pozzolanic binder material. More preferably, the binder composition comprises or consists of 30 - 90 wt.% of hydraulic binder and 70 - 10 wt.% of latent hydraulic and/or pozzolanic binder material.

In particular, the hydraulic binder is cement. Preferably, the latent hydraulic and/or pozzolanic binder material is slag and/or fly ash. A highly preferred latent hydraulic binder material is slag.

Preferred cement is according to norm EN 197, in particular of type CEM I, especially CEM I 52.5 N. However other types of cements can be used as well.

For example, a premixed binder composition can comprise latent hydraulic and/or pozzolanic binder material, e.g. slag and/or fly ash, and the activator composition. Such a binder composition can for example be used with additional hydraulic binder, e.g. cement, and aggregates in ready-mix mortars or concrete.

However, it is as well possible to provide a premixed binder composition comprising hydraulic binder, e.g. cement, and the activator composition. Together with additional latent hydraulic and/or pozzolanic binder material, e.g. slag and/or fly ash, and aggregates, ready-mix mortars or concrete can be produced.

According to another preferred embodiment, the binder composition comprises the activator composition, hydraulic binder and latent hydraulic and/or pozzolanic binder material.

A proportion of the activator composition in the binder composition is from 0.1 - 10 wt%, in particular 2 - 6%, with respect to the total amount of hydraulic binder and latent hydraulic and pozzolanic binder material in the binder composition.

In a particularly preferred embodiment, the binder composition further comprises a plasticizer as defined above, especially a polycarboxylate, in particular a comb copolymer with polycarboxylate backbone and polyether side chains. A preferred proportion of the plasticizer is 0.01 - 10 Gew.-%, with respect to the total amount of binder in the binder composition.

A further aspect of the present invention relates to a method for the production of a binder composition whereby the activator composition as disclosed herein is intermixed with a hydraulic binder and/or a latent hydraulic and/or pozzolanic binder material, in particular cement and/or slag. Thereby, the activator composition, the hydraulic binder and the latent hydraulic and/or pozzolanic binder material are in particular defined as above.

Preferably, the activator composition is intermixed with the hydraulic binder and/or the latent hydraulic and/or pozzolanic binder material before and/or during a grinding process of the binder. Thus, the activator composition is preferably used as an additive during grinding of the latent hydraulic binder and/or pozzolanic and/or hydraulic binder material. Surprisingly, it has been found that this procedure further enhances the activity of the activator composition.

According to a highly preferred embodiment, the activator composition is intermixed with the latent hydraulic and/or pozzolanic binder material before and/or during a grinding process of the latent hydraulic and/or pozzolanic binder material, which is in particular slag.

The activator composition may as well be used as a grinding aid in order to improve the efficiency of the grinding process.

However, it is as well possible to intermix the activator composition after the grinding process.

Especially, the binder composition with the activator composition can be used for the production of a formed body comprising the hardened binder composition. Such a formed body is produced by adding water to the binder composition in order to initiate the hardening process. This is done in a matter known to the person skilled in the art.

Thus, another aspect of the present invention concerns a formed body, comprising or consisting of hardened binder composition after mixing with water. In particular, the hardened binder composition comprises a hardened binder composition of cement with slag and/or fly ash.

An additional aspect of the invention relates to the use of the activator composition as described herein for the activation latent hydraulic and/or pozzolanic binder materials. Especially, the activator is used for the activation of slag and/or fly ash.

According to a preferred embodiment, the activator is used for the activation of latent hydraulic and/or pozzolanic binder material in a binder composition comprising a latent hydraulic binder material and/or pozzolanic binder material and/or hydraulic binder, in particular in a binder composition comprising slag and/or fly ash and cement.

Furthermore, the activator can be used for early compressive strength enhancement in binder composition comprising latent hydraulic binder materials and/or pozzolanic binder materials and/or a hydraulic binder, in particular in a binder composition comprising slag and/or fly ash and cement.

Further advantageous configurations of the invention are evident from the exemplary embodiments.

### Exemplary embodiments

### 1. Activator compositions

### 1.1 First example of an activator composition

Table 1 shows a first inventive activator composition **Ac1.** The activator composition has been prepared by intermixing all of the components and the filler material. The activator composition **Ac1** is present as a dry powder composition.

**Table 1:**

| **Component** | **Substance** | **Amount [wt.%]** |
|---|---|---|
| A | NaOH | 17 |
| B | CaSO₄ · 0.5 H₂O | 53 |
| C | Ca(NO₃)₂ · 4 H₂O | 12 |
| Filler | CaCO₃ | 18 |

### 1.2 Second example of an activator composition (not according to the invention)

Table 2 shows a second activator composition **Ac2** which has been prepared in the same manner as the activator composition **Ac1**. In contrast to the first activator composition, component C has been omitted and replaced by filler material. Activator composition **Ac2** is present as a dry powder composition.

**Table 2:**

| **Component** | **Substance** | **Amount [wt.%]** |
|---|---|---|
| A | NaOH | 17 |
| B | CaSO₄ · 0.5 H₂O | 53 |
| Filler | CaCO₃ | 30 |

### 1.3 Third example of an activator composition

Table 3 shows a third inventive activator composition **Ac3** which has been prepared in the same manner as the activator composition **Ac1**. In contrast to the first activator composition, component A has been replaced by an earth alkali metal hydroxide and component B is a mixture of an alkali- and an earth alkali metal sulfate. Activator composition **Ac3** is present as a dry powder composition.

**Table 3:**

| **Component** | **Substance** | **Amount [wt.%]** |
|---|---|---|
| A | Ca(OH)₂ | 19 |
| B | CaSO₄ · 0.5 H₂O | 26 |
| | Na₂SO₄ | 36 |
| C | Ca(NO₃)₂ · 4 H₂O | 15 |
| Filler | CaCO₃ | 0 |

### 2. Activation of blended cements by addition of activator to mortar mix

### 2.1 Methods

The activator compositions **Ac1, Ac2** and **Ac3** as described in tables 1 - 3 have been tested for the direct activation of mortar compositions comprising cement and slag or fly ash. Thereby, the activator composition has been intermixed with the additional components in the usual way when preparing the mortar compositions.

Specifically and for convenience, to assess the performance of the activator compositions, mortar formulations "equivalent" to a common housing concrete have been used. This housing concrete corresponds to the following definition: C25/30, XF1, 280 kg/m³ of cement, W/C=0.6, G/S=1.275 (according to EN 206-1). "Equivalent" means that in the present mortar compositions
- we have kept the same amount in mass of the cement, sand and water, than in the concrete, and
- the aggregates larger than 4 mm in mean diameter have been removed and replaced by a quantity of the previous sand such as to provide the same surface than the aggregates.

Thus, present mortars contain 470 kg/m³ of cement and keep W/C = 0.6. The early compressive strengths of mortar compositions have been determined 18 hours and 24 hours after mixing at 20ºC or 24 hours and 48 hours after mixing at 10ºC. Additionally, the compressive strengths after 7 days or 28 days have been measured for exemplary compositions. The compressive strength has been measured with prisms according to the standard EN 196-1.

The flow table spread values were assessed through a specific method designed for "equivalent" mortar formulations. It is similar to EN 12350-5 but using a cone of the following dimensions: height 150 mm, bottom inner diameter 100 mm, top inner diameter 50 mm.

The cement used for the experiments is of type CEM I 52.5 N CE CP2 NF, available from Holcim, Dannes plant.

As plasticizer, Viscocrete Tempo 12, available from Sika (France), was used. This is a plasticizer based on a comb copolymer with polycarboxylate backbone and polyether side chains.

Slag according to EN 15167-1 was used from different sources with different fineness as indicated below.

Fly ash according to EN 450-1 was used from SAFA.

### 2.2 Activator composition Ac1 in binder compositions with first type of slag

Table 4 shows a comparison of the activation of different binder compositions with and without activator composition **Ac1** at a temperature of 20ºC. The slag used in this series is from Bögel/Walterstadt with a Blaine fineness of 4200 cm²/g. All of the tests (**Ref.1, F11, F12, F13, F14**) have been performed with fresh slag, i.e. less than two weeks after grinding of the slag.

The filler used in some mortar formulations is crystalline silica, finely divided, chosen to be inert under present conditions.

**Table 4:**

| **Component** | **Ref.1** | **F11** | **F12** | **F13** | **F14** |
|---|---|---|---|---|---|
| Binder[kg/m³] | 470 | 470 | 470 | 470 | 470 |
| - Cement | - 70 % | - 40 % | - 40 % | - 40 % | - 40 % |
| - Slag | - 30 % | - 60 % | - 60 % | - 30 % | - 30 % |
| - Silicious filler | - 0 % | - 0 % | - 0 % | - 30 % | - 30 % |
| Sand [kg/m³] | 1430 | | | | |
| Calcareous filler [kg/m³] | 18 | | | | |
| Water [kg/m³] | 282 (W/C = 0.6) | | | | |
| Activator Ac1 [wt.% of binder] | 0 | 0 | 4 | 0 | 4 |
| Plasticizer [wt.% of binder] | 0.65 | 0.5 | 0.5 | 0.5 | 0.5 |

| **Properties** | | | | | |
|---|---|---|---|---|---|
| Flow table spread [mm] | 235 | 245 | 187 | 234 | 179 |
| Compressive strength (20ºC) | | | | | |
| -18 h [MPa] | 4.5 | 1.4 | 3.4 | 1.6 | 2.8 |
| -24 h [MPa] | 7.4 | 2.4 | 6.0 | 2.4 | 5.2 |

| | | | | | |
|---|---|---|---|---|---|
| **Ref.1** is a comparative example with low slag content. In the case of a high slag content, a comparison of test **F11** (no activator) and **F12** (with activator) clearly shows a very significant activation or enhancement in early compressive strength caused by the activator composition. As can be deduced from experiments **F13** and **F14**, the same is true when the amount of slag is reduced by replacing part of the slag in the binder composition with siliceous filler. | | | | | |

Comparison of **F13** with **F11**, i.e. when half of the slag amount is replaced by an inert filler, shows that the slag does not provide better strength. This means that the slag is not activated at early ages.

Remarkably, in the cases where the activator is used, when reducing the amount of slag while keeping the amount of cement constant (see experiments **F12** and **F14**), the compressive strength is lowered. Thus, the activator composition **Ac1** is clearly acting on the slag in the binder composition.

Flow table spread values of > 160 mm correspond to consistencies of class S4 or even S5 (as defined in norm EN 206-1).

### 2.3 Activator composition Ac1 in binder compositions with second type of slag

Table 5 shows another comparison of the activation of different binder compositions with and without activator composition **Ac1** at a temperature of 20ºC. The slag used in this series is from Heilderberger Cement in Leimen with a Blaine fineness of 4500 cm²/g. All of the tests (**Ref.3, F31, F32, F33, F34**) have been performed with fresh slag, i.e. less than two weeks after grinding of the slag.

Table 6 shows a corresponding set of experiments at a temperature of 10ºC with the same activator composition **Ac1** and the same type of slag as used for the tests shown in table 5.

**Table 5:**

| **Component** | **Ref.3** | **F31** | **F32** | **F33** | **F34** |
|---|---|---|---|---|---|
| Binder[kg/m³] | 470 | 470 | 470 | 470 | 470 |
| - Cement | - 70 % | - 40 % | - 40 % | - 40 % | - 40 % |
| - Slag | - 30 % | - 60 % | - 60 % | - 30 % | - 30 % |
| - Siliceous filler | - 0 % | - 0 % | - 0 % | - 30 % | - 30 % |
| Sand [kg/m³] | 1430 | | | | |
| Calcareous filler [kg/m³] | 18 | | | | |
| Water [kg/m³] | 282 (W/C = 0.6) | | | | |
| Activator Ac1 [wt.% of binder] | 0 | 0 | 4 | 0 | 4 |
| Plasticizer [wt.% of binder] | 0.65 | 0.5 | 0.5 | 0.5 | 0.5 |

| **Properties** | | | | | |
|---|---|---|---|---|---|
| Flow table spread [mm] | 235 | 240 | 195 | 227 | 177 |
| Compressive strength (20ºC) | | | | | |
| -18 h [MPa] | 4.7 | 1.6 | 4.0 | 1.5 | 3.0 |
| -24 h [MPa] | 7.9 | 2.5 | 6.4 | 2.4 | 5.2 |

Same conclusions than for the results of table 4 can be drawn down.

**Table 6:**

| **Component** | **Ref.4** | **F41** | **F42** | **F43** | **F 44** |
|---|---|---|---|---|---|
| Binder[kg/m³] | 470 | 470 | 470 | 470 | 470 |
| - Cement | - 70 % | - 40 % | - 40 % | - 40 % | - 40 % |
| - Slag | - 30 % | - 60 % | - 60 % | - 30 % | - 30 % |
| - Siliceous filler | - 0 % | - 0 % | - 0 % | - 30 % | - 30 % |
| Sand [kg/m³] | 1430 | | | | |
| Calcareous filler [kg/m³] | 18 | | | | |
| Water [kg/m³] | 282 | | | | |
| Activator Ac1 [wt.% of binder] | 0 | 0 | 4 | 0 | 4 |
| Plasticizer [wt.% of binder] | 0.60 | 0.45 | 0.45 | 0.45 | 0.45 |

| **Properties** | | | | | |
|---|---|---|---|---|---|
| Flow table spread [mm] | 230 | 231 | 191 | 207 | 164 |
| Compressive strength (10ºC) | | | | | |
| -24 h [MPa] | 0.7 | 0.5 | 0.8 | 0.5 | 0.7 |
| -48 h [MPa] | 6.1 | 2.1 | 4.1 | 2.0 | 3.8 |

At 10°C, the strength development is lower, but activation of the slag by the activator composition is clearly present (**F44** and **F42**).

At 10°C and 48 h, the strengths of the activated mortars (**F42** and **F44**) are almost double compared to the reference mortars (**F41** and **F43**). At 24 h, the difference is lower due to setting times close to 24 h. However, with concrete, the increase of the strength at 10°C and 24 h would be much higher since the setting times are shorter than those of the associated mortars.

### 2.4 Activator composition Ac1 in binder compositions with third type of slag

Table 7 shows a further comparison of the activation of different binder compositions with and without activator composition **Ac1** at a temperature of 20ºC. The slag used in this series is from Ecocem and has a Blaine fineness of 4500 cm²/g. All of the tests (**Ref.5**, **F51, F52, F53, F54**) have been performed with a quality of slag at least 3 months old. Overall, the experiments shown in table 7 are qualitatively similar to the experiments shown in tables 4 or 5, respectively. Same conclusions than for the two other qualities of slag can be drawn down.

**Table 7:**

| **Component** | **Ref. 5** | **F51** | **F52** | **F53** | **F54** |
|---|---|---|---|---|---|
| Binder[kg/m³] | 470 | 470 | 470 | 470 | 470 |
| - Cement | - 70 % | - 40 % | - 40 % | - 40 % | - 40 % |
| - Slag | - 30 % | - 60 % | - 60 % | - 30 % | - 30 % |
| - Siliceous filler | - 0 % | - 0 % | - 0 % | - 30 % | - 30 % |
| Sand [kg/m³] | 1430 | | | | |
| Calcareous filler [kg/m³] | 18 | | | | |
| Water [kg/m³] | 282 (W/C = 0.6) | | | | |
| Activator Ac1 [wt.% of binder] | 0 | 0 | 4 | 0 | 4 |
| Plasticizer [wt.% of binder] | 0.85 | 0.70 | 0.70 | 0.70 | 0.70 |

| **Properties** | | | | | |
|---|---|---|---|---|---|
| Flow table spread [mm] | 228 | 228 | 170 | 228 | 165 |
| Compressive strength (20ºC) | | | | | |
| -18 h [MPa] | 3.4 | 1.4 | 2.4 | 1.3 | 2.1 |
| -24 h [MPa] | 6.9 | 2.3 | 5.2 | 2.2 | 4.8 |

### 2.5 Activator composition Ac2 in binder compositions with third type of slag

Table 8 shows a comparison of the activation of a binder composition with and without activator composition **Ac2** (table 2) at a temperature of 20ºC. The slag used in this series is the same Ecocem quality as described in chapter 2.4.

**Table 8:**

| **Component** | **Ref.6** | **F61** |
|---|---|---|
| Binder[kg/m³] | 470 | 470 |
| - Cement | - 40 % | - 40 % |
| - Slag | - 60 % | - 60 % |
| - Siliceous filler | - 0 % | - 0 % |
| Sand [kg/m³] | 1430 | |
| Calcareous filler [kg/m³] | 18 | |
| Water [kg/m³] | 282 (W/C = 0.6) | |
| Activator Ac2 [wt.% of binder] | 0 | 4 |
| Plasticizer [wt.% of binder] | 0.70 | 0.70 |

| **Properties** | | |
|---|---|---|
| Flow table spread [mm] | 228 | 168 |
| Compressive strength (20°C) | | |
| -18 h [MPa] | 1.4 | 1.7 |
| -24 h [MPa] | 2.3 | 3.8 |
| -28 d [MPa] | 46.5 | 40.8 |

| | | |
|---|---|---|
| **Ref.6** is a comparative example without activator. A comparison of **Ref.6** (no activator) and **F61** (with activator) clearly shows a significant enhancement in early compressive strength caused by the activator composition **Ac2** (not according to the invention). | | |

### 2.6 Activator composition Ac3 in binder compositions with third type of slag

Table 9 shows the activation of a binder composition with activator composition **Ac3** (table 3) at a temperature of 20°C. The slag used for experiment **F71** is the same than before from Ecocem with a Blaine fineness of 4500 cm²/g. For comparison, the results of experiment **F51** (no activator at all) and experiment **F52** (activator **Ac1**) under similar conditions have been reproduced as well in table 9.

**Table 9:**

| **Component** | **F51** | **F52 (Ac1)** | **F71 (Ac3)** |
|---|---|---|---|
| Binder[kg/m³] | 470 | 470 | 470 |
| - Cement | - 40 % | - 40 % | - 40 % |
| - Slag | - 60 % | - 60 % | - 60 % |
| - Siliceous filler | - 0 % | - 0 % | - 0 % |
| Sand [kg/m³] | 1430 | | |
| Calcareous filler [kg/m³] | 18 | | |
| Water [kg/m³] | 282 (W/C = 0.6) | | |
| Activator Ac3 [wt.% of binder] | 0 | 4 | 4 |
| Plasticizer [wt.% of binder] | 0.70 | 0.70 | 0.70 |

| **Properties** | | | |
|---|---|---|---|
| Flow table spread [mm] | 228 | 170 | 235 |
| Compressive strength (20ºC) | | | |
| -18 h [MPa] | 1.4 | 2.4 | 1.6 |
| -24 h [MPa] | 2.3 | 5.2 | 4.6 |

A comparison of **F51** (no activator) and **F71** (with activator **Ac3**) clearly shows a significant enhancement caused by activator composition **Ac3**, in particular after 24 h. Thus, similar to activator composition **Ac1** (experiment **F52**), activator composition **Ac3** is clearly enhancing early compressive strength of the binder composition.

Remarkably, the flow table spread measured in experiment **F71** (235 mm) with activator **Ac3** is comparable to the flow table spread of experiment **F51** (228 mm) even though the same concentration of plasticizer is used. Therefore, activator composition **Ac3** does not affect the plasticity although strongly enhancing early compressive strength.

### 2.7 Activator composition Ac1 in binder compositions with fly ash

Table 10 shows a comparison of the activation of different binder compositions comprising fly ash, with and without activator composition **Ac1** at a temperature of 20ºC. The fly ash used in this series is Safament HKV from SAFA in Germany.

**Table 10:**

| **Component** | **Ref.100** | **F101** | **F102** |
|---|---|---|---|
| Binder[kg/m³] | 470 | 470 | 470 |
| - Cement | - 75 % | - 50 % | - 50 % |
| - Fly ash | - 25 % | - 50 % | - 50 % |
| - Siliceous filler | - 0 % | - 0 % | - 0 % |
| Sand [kg/m³] | 1430 | | |
| Calcareous filler [kg/m³] | 18 | | |
| Water [kg/m³] | 282 (W/C = 0.6) | | |
| Activator Ac1 [wt.% of binder] | 0 | 0 | 4 |
| Plasticizer [wt.% of binder] | 0.8 | 0.7 | 0.7 |

| **Properties** | | | |
|---|---|---|---|
| Flow table spread [mm] | 222 | 240 | 185 |
| Compressive strength (20ºC) | | | |
| -18 h [MPa] | 1.8 | 0.8 | 1.3 |
| -24 h [MPa] | 6.6 | 2.6 | 3.3 |

| | | | |
|---|---|---|---|
| **Ref.100** is a comparative example with relatively low fly ash content. In the case of a higher fly ash content, a comparison of test **F101** (no activator) and **F102** (with activator) clearly shows a significant activation caused by the activator composition. | | | |

Table 11 shows a further comparison of the activation of a binder composition with fly ash at a temperature of 20ºC. In this experiment (**F201**), an activator consisting of activator composition **Ac1** with additional Ca(OH)₂ has been used. The fly ash used is the same as in experiments **Ref.100**, **F101**, **F102.**

**Table 11:**

| **Component** | **F201** |
|---|---|
| Binder[kg/m³] | 470 |
| - Cement | - 50 % |
| - Fly ash | - 50 % |
| - Siliceous filler | - 0 % |
| Sand [kg/m³] | 1430 |
| Calcareous filler [kg/m³] | 18 |
| Water [kg/m³] | 282 (W/C = 0.6) |
| Activator [wt.% of binder] | |
| - Ac1 | 4 |
| - Ca(OH)₂ | 4 |
| Plasticizer [wt.% of binder] | 0.7 |

| **Properties** | |
|---|---|
| Flow table spread [mm] | 170 |
| Compressive strength (20ºC) | |
| - 18 h [MPa] | 1.9 |
| - 24 h [MPa] | 4.2 |

As can be concluded from table 11, the activator composition with additional Ca(OH)₂ further enhances the early strengths compared to the pure activator composition **Ac1** (**F102**, table 10).

### 2.8 Comparative tests with individual activator components

For comparative purposes, activation of binder compositions with individual components of the activator composition **Ac1** has been tested in comparative experiments **C1 - C5.** Experiments **C1** and **C5** are identical to experiments **F51** and **F52** (see table 7), respectively. Experiments **C2 - C4** are based on experiment **F52.** However, in these experiments the activator composition **Ac1** has been modified by omitting in each experiment two of the three components **A**, **B** and **C** as indicated in table 12. In each case, the omitted components have been replaced by CaCO₃ filler to keep the volume of the activator composition **Ac1** essentially constant. In other words, experiments **C2 - C4** show the activation potential of the individual substances **A**, **B**, and **C** in the activator composition **Ac1**.

**Table 12:**

| **Component** | **C1 (=F51)** | **C2** | **C3** | **C4** | **C5 (=F52)** |
|---|---|---|---|---|---|
| Binder[kg/m³] | 470 | 470 | 470 | 470 | 470 |
| - Cement | - 40 % | - 40 % | - 40 % | - 40 % | - 40 % |
| - Slag | - 60 % | - 60 % | - 60 % | - 60 % | - 60 % |
| - Siliceous filler | - 0 % | - 0 % | - 0 % | - 0 % | - 0 % |
| Sand [kg/m³] | 1430 | | | | |
| Calcareous filler [kg/m³] | 18 | | | | |
| Water [kg/m³] | 282 (W/C = 0.6) | | | | |

| Activator | | | | | |
|---|---|---|---|---|---|
| - Component A (NaOH) | No | Present | No | No | Present |
| - Component B (Ca-Sulfate) | No | No | No | Present | Present |
| - Component C (Ca-Nitrate) | No | No | Present | No | Present |
| Plasticizer [wt.% of binder] | 0.70 | 0.70 | 0.70 | 0.70 | 0.70 |

| **Properties** | | | | | |
|---|---|---|---|---|---|
| Flow table spread [mm] | 228 | 166 | 255 | 214 | 170 |
| Compressive strength (20ºC) | | | | | |
| -18 h [MPa] | 1.4 | 1.9 | 1.3 | 1.1 | 2.4 |
| -24 h [MPa] | 2.3 | 3.4 | 2.1 | 2.1 | 5.2 |
| -28 d [MPa] | 46.5 | 44.0 | 47.7 | 43.6 | 44.7 |

As can be deduced from a comparison of reference experiment **C1** (no activator component at all) with experiments **C3** and **C4**, components B and C taken alone do not activate the binder composition as desired. In contrast, the compression strengths at 18 h and 24 h are even reduced when compared to reference **C1** without any activating component. Furthermore, component **A** (NaOH) taken alone (experiment **C2**), shows moderate activation. However, in combination with components **B** and **C** (experiment **C5** with inventive activator **Ac1**) shows a significantly higher activation of the binder composition at 18 h and 24 h. Consequently, the inventive composition of the activator **Ac1** acts synergistically on the binder composition.

Moreover, activation of binder compositions with individual pairs, each with two of the three components of the activator composition **Ac1** have been tested in comparative experiments **C7** and **C8**. Table **13** gives an overview of the experiments performed. Experiments **C1**, **C5** and **F61**, which are already comprised in table 12 and 8, have been reproduced in order to get a better overview.

**Table 13: (F61 (Ac2) not according to the invention)**

| **Component** | **C1** | **C5 (Ac1)** | **F61 (Ac2)** | **C7** | **C8** |
|---|---|---|---|---|---|
| Binder[kg/m³] | 470 | 470 | 470 | 470 | 470 |
| - Cement | - 40 % | - 40 % | - 40 % | - 40 % | - 40 % |
| - Slag | - 60 % | - 60 % | - 60 % | - 60 % | - 60 % |
| - Siliceous filler | - 0 % | - 0 % | - 0 % | - 0 % | - 0 % |
| Sand [kg/m³] | 1430 | | | | |
| Calcareous filler [kg/m³] | 18 | | | | |
| Water [kg/m³] | 282 (W/C = 0.6) | | | | |

| Activator | | | | | |
|---|---|---|---|---|---|
| - Component A (NaOH) | No | Present | Present | Present | No |
| - Component B (Ca-Sulfate) | No | Present | Present | No | Present |
| - Component C (Ca-Nitrate) | No | Present | No | Present | Present |
| Plasticizer [wt.% of binder] | 0.70 | 0.70 | 0.70 | 0.70 | 0.70 |

| **Properties** | | | | | |
|---|---|---|---|---|---|
| Flow table spread [mm] | 228 | 170 | 168 | 180 | 230 |

| Compressive strength (20ºC) | | | | | |
|---|---|---|---|---|---|
| -18 h [MPa] | 1.4 | 2.4 | 1.7 | 1.9 | 1.4 |
| -24 h [MPa] | 2.3 | 5.2 | 3.8 | 3.0 | 2.6 |
| -28 d [MPa] | 46.5 | 44.7 | 40.8 | 42.2 | 44.5 |

Table 13 shows that combinations of components A, B and C (experiment **C5** with activator composition **Ac1**) are most efficient in relation of high early strengths, both at 18 h and 24 h. At least at 24 h, the combination of components A and B without component C (experiment **F61** with activator composition **Ac2**) still shows significantly higher early strengths than the other binary combinations A and C or B and C (comparative experiments **C7** and **C8**), respectively.

Additionally, the performance reached with each individual component of the activator composition **Ac1** has been tested while keeping in all cases the amount of activator used at the same level (4 wt.% of the binder) and adjusting the amount of plasticizer for each trial in order to achieve the same level of flow table spread with each formulation (experiments **D1 - D5**).

Plasticizer, cement and slag used in these series are the same as described in chapters 2.1 and 2.4. However, the cement as well as the slag are each from a different batch. Thus, experiments **D1 - D5** are not directly comparable with the other experiments.

**D1** is a comparative example without any activator component. In experiment **D2** to **D4**, each component of the activator is used alone.

In experiment **D5,** the activator is similar to activator **Ac1** but without the filler for a more direct comparison. The proportion of the different component in between each other, are kept identical than in **Ac1.** In other words, experiments **D2 - D4** show the activation potential of the individual substances A, B, and C in the activator composition **Ac1.** Table 14 gives an overview of the experiments performed.

**Table 14:**

| **Component** | **D1** | **D2** | **D3** | **D4** | **D5** |
|---|---|---|---|---|---|
| Binder[kg/m³] | 470 | 470 | 470 | 470 | 470 |
| - Cement | - 40 % | - 40 % | - 40 % | - 40 % | - 40 % |
| - Slag | - 60 % | - 60 % | - 60 % | - 60 % | - 60 % |
| - Siliceous filler | - 0 % | - 0 % | - 0 % | - 0 % | - 0 % |
| Sand [kg/m³] | 1430 | | | | |
| Calcareous filler [kg/m³] | 18 | | | | |
| Water [kg/m³] | 282 (W/C = 0.6) | | | | |

| Activator [wt.% of binder] | | | | | |
|---|---|---|---|---|---|
| - Component A (NaOH) | No | 4 | No | No | 0.84 |
| - Component B (Ca-Sulfate) | No | No | No | 4 | 2.58 |
| - Component C (Ca-Nitrate) | No | No | 4 | No | 0.58 |
| Plasticizer [wt.% of binder] | 0.50 | 0.85 | 0.45 | 0.65 | 0.85 |

| **Properties** | | | | | |
|---|---|---|---|---|---|
| Flow table spread [mm] | 239 | Not measu reable/ too stiff | 238 | 235 | 241 |

| Compressive strength (20ºC) | | | | | |
|---|---|---|---|---|---|
| -24 h [MPa] | 2.3 | 3.0 | 1.7 | 2.0 | 3.6 |

Table 14 shows that the combination of components A, B and C (experiment **D5** with similar composition than activator **Ac1** but without the filler which is inert) is more efficient in relation of fluidity and high early strengths. Component A is not usable alone (**D2**) at the same amount than the complete activator (**D5**) because it provides to the fresh concrete a very bad rheology. The concrete is too stiff to be usable, even if the amount of plasticizer is increased in an attempt to recover the necessary fluidity. As well, with component A alone (**D2**) it is not possible to reach an early strength comparable to the combination if the components A, B and C (**D5**).

Component B (**D3**) and C (**D4**) alone have even a negative effect on the early strength compared to the reference without any activator components (**D1**). Thus, components A, B and C used according to the invention are clearly interacting in a functional and synergistic manner.

### 3. Performance of activator Ac1 in slag based concrete formulations

The performance of activator Ac**1** in slag based concrete formulations has been tested as well.

In a first concrete formulation **CF1**, a blend of cement CEM I 52.5 N (from Holcim Dannes plant) and Slag (Ecocem; Blaine fineness: 4300 cm²/g) has been used as binder component. The plasticizer used (Viscocrete Tempo 12) is the same as mentioned in chapter 2.1 above. Formulation **CF1** further comprises activator composition **Ac1** (table 1).

For comparison, a standard concrete formulation **CFR** without any activator compositions has been tested as well. This formulation is based on CEM III 42.5 N binders (from Holcim Ebanges plant; consisting of approximately 60% of slag and 40% Portland cement). A plasticizer was also used, as indicated in table 15.

Concrete formulations **CF1** and **CFR** have been prepared and tested at temperatures of 10ºC as well as at temperatures of 20ºC.

Slump of the fresh concretes has been measured according to EN 12350-2.

Compressive strengths for both types of concrete formulations (**CF1** and **CFR**) have been measured with cylinders (11 × 22 cm) according to the standard EN 196-1. Shrinkage has been determined on prisms (7 × 7 × 28 cm) 3 - 28 days after concrete mix according to NF P 15-433.

Table 15 gives a detailed overview of the two types of concrete formulations and their properties.

**Table 15:**

| **Component** | **CF1** | **CFR** |
|---|---|---|
| Binder [kg/m³] (wt.-% of binder) | | |
| - Cement (CEM I 52.5 N, Dannes) | 148 (40%) | 0 |
| - Cement (CEM III 42.5 N, Ebanges) | 0 | 294 (100%) |
| - Slag | 222 (60 %) | 0 |

| Aggregates | | |
|---|---|---|
| - 0/0.25 mm [kg/m³] (Hanches) | 260 | |
| - 0/4 mm [kg/m³] (Marolle) | 600 | |
| - 4/20 mm [kg/m³] (Gudmont) | 860 | |
| Free water [kg/m³] | 185 | 170 |
| Free water/binder | 0.5 | 0.58 |
| Activator Ac1 [kg/m³] (wt.-% of binder) | 12 (3.25%) | 0 |

| Plasticizer [kg/m³] (wt.-% of binder) | | |
|---|---|---|
| - Viscocrete Tempo 12 | 2.96 (0.8%) | 0 |
| - Isoflecx 77 (standard superplasticizer) | 0 | 1.7 (0.6%) |

| **Properties** | | |
|---|---|---|
| Slump [cm]/air content (%)/Temp (°C) | | |
| - 0 min | 22 / 1 / 12.9 | 9 / - / - |
| - 30 min | 23 / - / 13 | 7.5 / - / - |
| - 60 min | 22 / - / 13.6 | 0 / - / - |
| - 90 min | 23 / - / 14.3 | 0 / - / - |

| Compressive strength (10ºC) | | |
|---|---|---|
| - 19.5 h [MPa] | 2 | Not measurable |
| - 24 h [MPa] | 3 | 1.75 |

| Compressive strength (20ºC) | | |
|---|---|---|
| - 19.5 h [MPa] | 6 | 3 |
| - 24 h [MPa] | 6.25 | 4 |
| - 7 d [MPa] | 38.3 | 26 |
| - 28 d [MPa] | 49 | 39.7 |

| Shrinkage | | |
|---|---|---|
| - 3 d [µm/m] | 81 | 85 |
| - 7 d [µm/m] | 276 | 285 |
| - 14 d [µm/m] | 390 | 425 |
| - 21 d [µm/m] | 449 | 468 |
| - 28 d [µm/m] | 481 | 512 |

| | | |
|---|---|---|
| Remarkably, concrete formulation **CF1** (with activator composition **Ac1**) shows compressive strengths at 10ºC and at early times (19.5 h) as high as 2 MPa. At 20ºC, the compressive strength at early age (19.5 h) is double compared to the reference formulation **CFR**, and a value of approximately 50 MPa can be reached after 28 days. Nevertheless, it is possible to achieve slump class S5 (≥ 220 mm) for at least 90 min. Furthermore, the shrinkage of activated concrete formulation **CF1** is comparable to the shrinkage of standard concrete formulations (**CFR**). | | |

### 4. Workability time with different activator compositions

Furthermore, the workability time of slag blended cements has been tested at a Temperature of 20ºC.

Cement, slag and plasticizer used in these series are the same as described in chapter 2.4.

Initial flow table spreads were carefully adjusted at the same initial level around 240 mm by means of the plasticizer amount in order to have constant initial conditions before measuring the flow life. Table 16 gives an overview of the experiments.

**Table 16:**

| **Component** | **W1** | **W2** | **W3** | **W4** |
|---|---|---|---|---|
| Binder[kg/m³] | 470 | 470 | 470 | 470 |
| - Cement | - 70 % | - 40 % | - 40 % | - 40 % |
| - Slag | - 30 % | - 60 % | - 60 % | - 60 % |
| - Siliceous filler | - 0 % | - 0 % | - 0 % | - 0 % |
| Sand [kg/m³] | 1430 | | | |
| Calcareous filler [kg/m³] | 18 | | | |
| Water [kg/m³] | 282 (W/C = 0.6) | | | |
| Activator | No | No | **Ac 1** | **Ac 3** |
| Plasticizer [wt.% of binder] | 0.65 | 0.50 | 0.85 | 0.75 |

| **Properties** | | | | |
|---|---|---|---|---|
| Flow table spread [mm] | | | | |
| at 5 min | 242 | 240 | 238 | 236 |
| at 30 min | 235 | 203 | 265 | 250 |
| at 60 min | 223 | 190 | 275 | 242 |
| at 90 min | 210 | 177 | 250 | 230 |

As can be deduced from experiments **W1 - W4** (table 16), the inventive activator compositions (**Ac1** and **Ac3**) in combination with an appropriate dosage of plasticizer are compatible with a good flow life for at least 90 minutes.

### 5. Activation of slag blended cements by addition of activator at grinding stage

The activation of slag blended cements by addition of activator **Ac1** at grinding stage of the slag has been tested as well.

Cement and plasticizer used in this series are the same as mentioned in chapter 2.1 above. The slag used is from Heidelberger Cement in Leimen and in each experiment **G0** to **G3** it has a Blaine fineness of 4100 - 4400 cm²/g after grinding. In this series of experiments the performances are not measured on mortars but on concretes whose formulation is described below (table 17).

Compressive strengths for all concrete formulations have been measured with cylinders (11 × 22 cm) according to the standard EN 196-1.

As activator, **Ac1** (table 1) has been used.

Table 17 shows a comparison of the two different methods of activator addition at 20ºC.

**Table 17:**

| **Component** | | **G0** | **G1** | **G2** | **G3** |
|---|---|---|---|---|---|
| Binder [kg/m³] | | 370 | 370 | 370 | 370 |
| - Cement | | - 40 % | - 40 % | - 40 % | - 40 % |
| - Slag | | - 60 % | - 60 % | - 60 % | - 60 % |
| Sand 0/4 mm [kg/m³] | | 860 | | | |
| Aggregates 4/20 mm [kg/m³] | | 860 | | | |
| Water [kg/m³] | | 184.5 (W/C = 0.5) | | | |
| Activator Ac1 [kg/m³] | | 0 | 12 | 12 | 12 |
| Activator addition | | none | Co-grinding with slag | Co-grinding with slag | At concrete mix |
| Plasticizer [wt.% of binder] | | 0.64 | 0.64 | 0.79 | 0.79 |
| **Properties** | | | | | |
| Fresh concrete density [kg/dm³] | | 2.345 | 2.346 | 2.355 | 2.342 |
| Flow table spread according to standard EN 12350-5 | 5 min [cm] | 67 | 56 | 62 | 57 |
| | 30 min [cm] | 65 | 56 | 62 | 63 |
| | 60 min [cm] | 64 | 56 | 62 | 62 |
| | 90 min [cm] | 57 | 53 | 59 | 61,5 |
| Air content after 5 min (%) | | 0.9 | 1.3 | 1.2 | 1.1 |
| Air content after 90 min (%) | | 1.4 | 1.7 | 1.4 | 1.2 |
| Compressive strength (20ºC) | | | | | |
| -18 h [MPa] | | 2.9 | 7.9 | 9.1 | 6.4 |
| -24 h [MPa] | | 4.8 | 10.7 | 12.4 | 11.5 |
| -7 d [MPa] | | 31.0 | 32.8 | 39.5 | 39.9 |
| -28 d [MPa] | | 62.5 | 61.1 | 68.5 | 69.3 |

| | | | | | |
|---|---|---|---|---|---|
| **G0** is a comparative example with no activator addition at all featuring the lowest compressive strengths at all times. In experiment **G1** and **G2**, the activator has been co-grinded with the slag while in experiment **G3** the activator has been added after grinding of the slag, i.e. at concrete mix and similar to the experiments described in chapter 2. In experiment **G2**, the amount of plasticizer has been increased compared to experiment **G1** to achieve closer flow table spread values to experiment **G0.** Remarkably, the compressive strength at 18 h for experiments **G1** and **G2** are significantly better than for experiment **G3**. The compressive strengths for experiments **G2** and **G3** are similar at 7 days, and also at 28 days. Consequently, the co-grinding of the activator results in an additional improvement of the early compressive strength, without adversely affecting the strength at later times. | | | | | |

Thus, it will be appreciated by those skilled in the art that the present invention can be embodied in other specific forms without departing from the spirit or essential characteristics thereof. The presently disclosed embodiments are therefore considered in all respects to be illustrative and not restricted.

For example, it is possible to replace component A in activator compositions **Ac1**, or **Ac3** by one or more other alkali and/or an earth alkali metal salts.

As well, component B in activator compositions **Ac1** or **Ac3** can be replaced by one or more other metal sulfates.

Component **C** in activator compositions **Ac1** and **Ac3** can be replaced by another substance suitable for accelerating the hardening of a hydraulic binder material as defined in claim **1**.

Furthermore, the plasticizer and/or the calcareous filler used in the above mentioned experiments can e.g. be omitted or replaced by other substances.

In conclusion, a novel activator for activating latent hydraulic binders has been proposed which:
- can be combined with a plasticizer, making it possible to achieve a S4 or S5 consistency for fresh concrete for at least 90 minutes;
- allows to achieve a low viscosity of the fresh concrete which makes a very easy casting possible;
- gives rise to up to 2 MPa in compressive strength of the concrete at 18-20 hours and 10°C;
- gives rise to up to 50 MPa in compressive strength of the concrete at 28 days and 20°C
- allows to keep the shrinkage and expansion of the hardened concrete low, i.e. comparable to the shrinkage and expansion of similar concrete formulated without activator.

## Claims

1. Activator composition, in particular suitable for activating latent hydraulic and/or pozzolanic binder materials, comprising or consisting of:
a) a first component **A**, comprising or consisting of an alkali metal salt and/or an earth alkali metal salt or an alkali hydroxide and/or an earth alkali hydroxide;
b) a second component **B**, comprising or consisting of a metal sulfate;
c) a third component **C**, suitable for accelerating the hardening of a hydraulic binder material, wherein component C comprises or consists of an alkali nitrate and/or an earth alkali nitrate;
d) optionally, a filler material;
with at least the components **A**, **B** and **C** being chemically different,
wherein component **B** being present in an amount of 10 - 90 wt%, with respect to the total weight of the composition.

2. Activator composition according to any of preceding claims, **characterized in that** the alkali hydroxide and/or the earth alkali hydroxide, is NaOH and/or Ca(OH)₂.

3. Activator composition according to any of the preceding claims, **characterized in that** component **A** being present in an amount of 5 - 50 wt%, preferably 10 - 30 wt%, with respect to the total weight of the composition.

4. Activator composition according to any of preceding claims, **characterized in that** component **B** comprises or consists of calcium sulfate and/or sodium sulfate and/or potassium sulfate, in particular of calcium sulfate of the formula CaSO_{4·} 0.5 H₂O and/or sodium sulfate of the formula Na₂SO₄.

5. Activator composition according to any of preceding claims, **characterized in that** component **B** being present in an amount of 40 - 70 wt%, with respect to the total weight of the composition.

6. Activator composition according to any of preceding claims, **characterized in that** component **C** comprises or consists of Ca(NO₃)₂ · n H₂O and/or KNO₃ · y Ca(NO₃)₂ · n H₂O and/or NH₄NO₃ · y Ca(NO₃)₂ · n H₂O with n= 0 - 15 and y = 1-10.

7. Activator composition according to any of preceding claims, **characterized in that** component C being present in an amount of up to 50 wt%, preferably 5 - 25 wt%, with respect to the total weight of the composition.

8. Activator composition according to any of preceding claims, **characterized in that** the filler material being CaCO₃ and/or SiO₂, preferably being present in an amount of 0.1 - 85 wt%.

9. Activator composition according to any of preceding claims, **characterized in that** the activator composition consists of:
a) 5 - 50 wt%, preferably 10 - 30 wt%, of an alkali hydroxide, in particular NaOH; and
b) 10 - 90 wt%, preferably 40 - 70 wt%, of calcium sulfate, in particular calcium sulfate of the formula CaSO_{4·} 0.5 H₂O; and
c) 5 - 25 wt% of Ca(NO₃)₂ · 4 H₂O and/or NH₄NO₃ · 6 Ca(NO₃)₂ · 2 H₂O, especially Ca(NO₃)₂ · 4 H₂O;
d) complement to 100 wt%, in particular 0 - 85 wt%, preferably 0.1 - 30 wt%, of a filler material, especially CaCO₃.

10. Activator composition according to any of preceding claims, **characterized in that** the activator composition consists of:
a) 5 - 50 wt%, preferably 10 - 30 wt%, of an alkali hydroxide, in particular NaOH; and
b) 10 - 90 wt%, preferably 40 - 70 wt%, of calcium sulfate, in particular calcium sulfate of the formula CaSO₄ · 0.5 H₂O; and
c) 1 - 50 wt%, preferably 5 - 25 wt% of Ca(NO₃)₂ · 4 H₂O and/or NH₄NO₃ · 6 Ca(NO₃)₂ · 2 H₂O, especially Ca(NO₃)₂ · 4 H₂O;
d) complement to 100 wt%, in particular 0 - 85 wt%, preferably 0.1 - 30 wt%, of a filler material, especially CaCO₃.

11. Activator composition according to any of claims 1 - 8, **characterized in that** the activator composition consists of:
a) 5 - 50 wt%, preferably 10 - 30 wt%, of an earth alkali metal salt, preferably and earth alkali metal hydroxide, in particular Ca(OH)₂; and
b) 10 - 90 wt%, preferably 40 - 70 wt%, of a mixture of an alkali metal sulfate and an earth alkali metal sulfate, in particular a mixture of calcium sulfate and sodium sulfate, preferably a mixture of CaSO₄ · 0.5 H₂O and Na₂SO₄; and
c) 1 - 50 wt%, preferably 5 - 25 wt%, of Ca(NO₃)₂ · 4 H₂O and/or NH₄NO₃ · 6 Ca(NO₃)₂ · 2 H₂O, and
d) complement to 100 wt%, in particular 0 - 85 wt%, preferably 0.1 - 30 wt%, of a filler material, especially CaCO₃.

12. Binder composition comprising:
a) an activator composition according to any of claims 1 - 11, and
b) a hydraulic binder, in particular comprising cement, and
c) a latent hydraulic binder material and/or a pozzolanic binder material, in particular comprising slag and/or fly ash, and
d) optionally, a plasticizer.

13. Method for the production of a binder composition according claim 12 whereby an activator composition according to any of claims 1 - 11 is intermixed with a hydraulic binder and a latent hydraulic binder material and/or a pozzolanic binder material.

14. Method according to claim 13, **characterized in that** the activator composition is intermixed with the hydraulic binder and the latent hydraulic binder material and/or the pozzolanic binder material before and/or during a grinding process of these binders.

15. Use of an activator composition as described in any of claims 1 - 11 for the activation of latent hydraulic binder material and/or pozzolanic binder material, especially the activation of slag and/or fly ash.

## Patentansprüche

1. Aktivatorzusammensetzung, insbesondere zur Aktivierung von latent hydraulischen und/oder puzzolanischen Bindemitteln, umfassend oder bestehend aus:
a) einer ersten Komponente **A,** umfassend oder bestehend aus einem Alkalimetallsalz und/oder einem Erdalkalimetallsalz oder einem Alkalihydroxid und/oder einem Erdalkalihydroxid;
b) einer zweiten Komponente **B**, umfassend oder bestehend aus einem Metallsulfat;
c) einer dritten Komponente **C** zur Beschleunigung der Härtung eines hydraulischen Bindemittels, wobei Komponente **C** ein Alkalinitrat und/oder ein Erdalkalinitrat umfasst oder daraus besteht;
d) gegebenenfalls einem Füllstoff;
wobei die Komponenten **A**, **B** und **C** chemisch verschieden sind,
wobei Komponente **B** in einer Menge von 10-90 Gew.-%, bezogen auf das Gesamtgewicht der Zusammensetzung, vorliegt.

2. Aktivatorzusammensetzung nach einem der vorhergehenden Ansprüche, **dadurch gekennzeichnet, dass** es sich bei dem Alkalihydroxid und/oder dem Erdalkalihydroxid um NaOH und/oder Ca(OH)₂ handelt.

3. Aktivatorzusammensetzung nach einem der vorhergehenden Ansprüche, **dadurch gekennzeichnet, dass** Komponente **A** in einer Menge von 5-50 Gew.-%, vorzugsweise 10-30 Gew.-%, bezogen auf das Gesamtgewicht der Zusammensetzung, vorliegt.

4. Aktivatorzusammensetzung nach einem der vorhergehenden Ansprüche, **dadurch gekennzeichnet, dass** Komponente B Calciumsulfat und/oder Natriumsulfat und/oder Kaliumsulfat, insbesondere Calciumsulfat der Formel CaSO₄ · 0,5 H₂O und/oder Natriumsulfat der Formel Na₂SO₄, umfasst oder daraus besteht.

5. Aktivatorzusammensetzung nach einem der vorhergehenden Ansprüche, **dadurch gekennzeichnet, dass** Komponente **B** in einer Menge von 40-70 Gew.-%, bezogen auf das Gesamtgewicht der Zusammensetzung, vorliegt.

6. Aktivatorzusammensetzung nach einem der vorhergehenden Ansprüche, **dadurch gekennzeichnet, dass** Komponente **C** Ca(NO₃)₂ · n H₂O und/oder KNO₃ · y C₉(NO₃)₂·nH₂O und/oder NH₄NO₃ · y Ca(NO₃)₂ · n H₂O mit n = 0-15 und y = 1-10 umfasst oder daraus besteht.

7. Aktivatorzusammensetzung nach einem der vorhergehenden Ansprüche, **dadurch gekennzeichnet, dass** Komponente **C** in einer Menge von bis zu 50 Gew.-%, vorzugsweise 5-25 Gew.-%, bezogen auf das Gesamtgewicht der Zusammensetzung, vorliegt.

8. Aktivatorzusammensetzung nach einem der vorhergehenden Ansprüche, **dadurch gekennzeichnet, dass** es sich bei dem Füllstoff um CaCO₃ und/oder SiO₂, das vorzugsweise in einer Menge von 0,1-85 Gew.-% vorliegt, handelt.

9. Aktivatorzusammensetzung nach einem der vorhergehenden Ansprüche, **dadurch gekennzeichnet, dass** die Aktivatorzusammensetzung aus:
a) 5-50 Gew.-%, vorzugsweise 10-30 Gew.-%, eines Alkalihydroxids, insbesondere NaOH; und
b) 10-90 Gew.-%, vorzugsweise 40-70 Gew.-%, Calciumsulfat, insbesondere Calciumsulfat der Formel CaSO₄ · 0,5 H₂O; und
c) 5-25 Gew.-% Ca(NO₃)₂ · 4 H₂O und/oder NH₄NO₃ · 6 Ca(NO₃)₂ · 2 H₂O, insbesondere Ca(NO₃)₂ · 4 H₂O;
d) Rest auf 100 Gew.-%, insbesondere 0-85 Gew.-%, vorzugsweise 0,1-30 Gew.-%, eines Füllstoffs, insbesondere CaCO₃;
besteht.

10. Aktivatorzusammensetzung nach einem der vorhergehenden Ansprüche, **dadurch gekennzeichnet, dass** die Aktivatorzusammensetzung aus:
a) 5-50 Gew.-%, vorzugsweise 10-30 Gew.-%, eines Alkalihydroxids, insbesondere NaOH; und
b) 10-90 Gew.-%, vorzugsweise 40-70 Gew.-%, Calciumsulfat, insbesondere Calciumsulfat der Formel CaSO₄ · 0,5 H₂O; und
c) 1-50 Gew.-%, vorzugsweise 5-25 Gew.-%, Ca(NO₃)₂ · 4 H₂O und/oder NH₄NO₃ · 6 Ca(NO₃)₂ · 2 H₂O, insbesondere Ca(NO₃)₂ · 4 H₂O;
d) Rest auf 100 Gew.-%, insbesondere 0-85 Gew.-%, vorzugsweise 0,1-30 Gew.-%, eines Füllstoffs, insbesondere CaCO₃;
besteht.

11. Aktivatorzusammensetzung nach einem der Ansprüche 1-8, **dadurch gekennzeichnet, dass** die Aktivatorzusammensetzung aus:
a) 5-50 Gew.-%, vorzugsweise 10-30 Gew.-%, eines Erdalkalimetallsalzes, vorzugsweise eines Erdalkalimetallhydroxids, insbesondere Ca(OH)₂; und
b) 10-90 Gew.-%, vorzugsweise 40-70 Gew.-%, einer Mischung eines Alkalimetallsulfats und eines Erdalkalimetallsulfats, insbesondere eine Mischung von Calciumsulfat und Natriumsulfat, vorzugsweise eine Mischung von CaSO₄ · 0,5 H₂O und Na₂SO₄; und
c) 1-50 Gew.-%, vorzugsweise 5-25 Gew.-%, Ca(NO₃)₂ · 4 H₂O und/oder NH₄NO₃ · 6 Ca(NO₃)₂ · 2 H₂O; und
d) Rest auf 100 Gew.-%, insbesondere 0-85 Gew.-%, vorzugsweise 0,1-30 Gew.-%, eines Füllstoffs, insbesondere CaCO₃;
besteht.

12. Bindemittelzusammensetzung, umfassend:
a) eine Aktivatorzusammensetzung nach einem der Ansprüche 1-11 und
b) ein hydraulisches Bindemittel, das insbesondere Zement umfasst, und
c) ein latent hydraulisches Bindemittel und/oder ein puzzolanisches Bindemittel, das insbesondere Schlacke und/oder Flugasche umfasst, und
d) gegebenenfalls einen Verflüssiger.

13. Verfahren zur Herstellung einer Bindemittelzusammensetzung nach Anspruch 12, bei dem man eine Aktivatorzusammensetzung nach einem der Ansprüche 1-11 mit einem hydraulischen Bindemittel und einem latent hydraulischen Bindemittel und/oder einem puzzolanischen Bindemittel vermischt.

14. Verfahren nach Anspruch 13, **dadurch gekennzeichnet, dass** man die Aktivatorzusammensetzung mit dem hydraulischen Bindemittel und einem latent hydraulischen Bindemittel und/oder einem puzzolanischen Bindemittel vor und/oder während eines Mahlprozesses dieser Bindemittel vermischt.

15. Verwendung einer Aktivatorzusammensetzung gemäß einem der Ansprüche 1-11 zur Aktivierung von latent hydraulischem Bindemittel und/oder puzzolanischem Bindemittel, insbesondere zur Aktivierung von Schlacke und/oder Flugasche.FIQS

## Revendications

1. Composition d'activateur, convenable en particulier pour l'activation des matériaux liants pouzzolaniques et/ou hydrauliques latents, comprenant ou étant constituée
a) d'un premier composant A, comprenant ou étant constitué d'un sel de métal alcalin et/ou d'un sel de métal alcalino-terreux ou d'un hydroxyde alcalin et/ou d'un hydroxyde alcalino-terreux ;
b) d'un deuxième composant B, comprenant ou étant constitué d'un sulfate de métal ;
c) d'un troisième composant C, convenable pour l'accélération du durcissement d'un matériau liant hydraulique, où le composant C comprend ou est constitué d'un nitrate alcalin et/ou d'un nitrate alcalino-terreux ;
d) éventuellement, d'un matériau de charge ;
au moins les composants A, B et C étant chimiquement différents,
où le composant B est présent selon une quantité de 10-90% en poids, par rapport au poids total de la composition.

2. Composition d'activateur selon l'une quelconque des revendications précédentes, **caractérisée en ce que** l'hydroxyde alcalin et/ou l'hydroxyde alcalino-terreux est NaOH et/ou Ca(OH)₂.

3. Composition d'activateur selon l'une quelconque des revendications précédentes, **caractérisée en ce que** le composant A est présent selon une quantité de 5-50% en poids, préférablement de 10-30% en poids, par rapport au poids total de la composition.

4. Composition d'activateur selon l'une quelconque des revendications précédentes, **caractérisée en ce que** le composant B comprend ou est constitué de sulfate de calcium et/ou de sulfate de sodium et/ou de sulfate de potassium, en particulier de sulfate de calcium de formule CaSO₄·0,5H₂O et/ou de sulfate de sodium de formule Na₂SO₄.

5. Composition d'activateur selon l'une quelconque des revendications précédentes, **caractérisée en ce que** le composant B est présent selon une quantité de 40-70% en poids, par rapport au poids total de la composition.

6. Composition d'activateur selon l'une quelconque des revendications précédentes, **caractérisée en ce que** le composant C comprend ou est constitué de Ca (NO₃)₂·nH₂O et/ou de KNO₃·yCa(NO₃)₂·nH₂O et/ou de NH₄NO₃·yCa(NO₃)₂·nH₂O, avec n= 0-15 et y= 1-10.

7. Composition d'activateur selon l'une quelconque des revendications précédentes, **caractérisée en ce que** le composant C est présent selon une quantité allant jusqu'à 50% en poids, préférablement de 5-25% en poids, par rapport au poids total de la composition.

8. Composition d'activateur selon l'une quelconque des revendications précédentes, **caractérisée en ce que** le matériau de charge est CaCO₃ et/ou SiO₂, étant préférablement présent selon une quantité de 0,1-85% en poids.

9. Composition d'activateur selon l'une quelconque des revendications précédentes, **caractérisée en ce que** la composition d'activateur est constituée a) de 5-50% en poids, préférablement de 10-30% en poids, d'un hydroxyde alcalin, en particulier NaOH ; et b) de 10-90% en poids, préférablement de 40-70% en poids, de sulfate de calcium, en particulier de sulfate de calcium de formule CaSO₄·0,5H₂O ; et
c) de 5-25% en poids de Ca (NO₃)₂·4H₂O et/ou de NH₄NO₃·6Ca(NO₃)₂·2H₂O, notamment de Ca(NO₃)₂·4H₂O ;
d) qsp 100% en poids, en particulier 0-85% en poids, préférablement 0,1-30% en poids, d'un matériau de charge, notamment de CaCO₃.

10. Composition d'activateur selon l'une quelconque des revendications précédentes, **caractérisée en ce que** la composition d'activateur est constituée a) de 5-50% en poids, préférablement de 10-30% en poids, d'un hydroxyde alcalin, en particulier NaOH ; et b) de 10-90% en poids, préférablement de 40-70% en poids, de sulfate de calcium, en particulier de sulfate de calcium de formule CaSO₄·0,5H₂O ; et
c) de 1-50% en poids, préférablement de 5-25% en poids, de Ca(NO₃)₂·4H₂O et/ou de NH₄NO₃·6Ca(NO₃)₂·2H₂O, notamment de Ca(NO₃)₂·4H₂O ;
d) qsp 100% en poids, en particulier 0-85% en poids, préférablement 0,1-30% en poids, d'un matériau de charge, notamment de CaCO₃.

11. Composition d'activateur selon l'une quelconque des revendications 1-8, **caractérisée en ce que** la composition d'activateur est constituée
a) de 5-50% en poids, préférablement de 10-30% en poids, d'un sel de métal alcalino-terreux, préférablement un hydroxyde de métal alcalino-terreux, en particulier Ca(OH)₂ ; et
b) de 10-90% en poids, préférablement de 40-70% en poids, d'un mélange d'un sulfate de métal alcalin et d'un sulfate de métal alcalino-terreux, en particulier d'un mélange de sulfate de calcium et de sulfate de sodium, préférablement un mélange de CaSO₄·0,5H₂O et de Na₂SO₄ ; et
c) de 1-50% en poids, préférablement de 5-25% en poids, de Ca(NO₃)₂·4H₂O et/ou de NH₄NO₃·6Ca(NO₃)₂·2H₂O ; et
d) qsp 100% en poids, en particulier 0-85% en poids, préférablement 0,1-30% en poids, d'un matériau de charge, notamment de CaCO₃.

12. Composition de liant, comprenant
a) une composition d'activateur selon l'une quelconque des revendications 1-11, et
b) un liant hydraulique, comprenant en particulier du ciment, et
c) un matériau liant hydraulique latent et/ou un matériau liant pouzzolanique, comprenant en particulier des scories et/ou des cendres volantes, et
d) éventuellement, un plastifiant.

13. Méthode de production d'une composition de liant selon la revendication 12, dans laquelle une composition d'activateur selon l'une quelconque des revendications 1-11 est mélangée avec un liant hydraulique et un matériau liant hydraulique latent et/ou un matériau liant pouzzolanique.

14. Méthode selon la revendication 13, **caractérisée en ce que** la composition d'activateur est mélangée avec le liant hydraulique et le matériau liant hydraulique latent et/ou le matériau liant pouzzolanique avant et/ou pendant un procédé de broyage de ces liants.

15. Utilisation d'une composition d'activateur telle que décrite selon l'une quelconque des revendications 1-11, pour l'activation d'un matériau liant hydraulique latent et/ou d'un matériau liant pouzzolanique, notamment l'activation de scories et/ou de cendres volantes.
